**Europäisches Patentamt**

**European Patent Office**

**Office européen des brevets**

(11) Veröffentlichungsnummer: **0 334 971 B1**

## EUROPÄISCHE PATENTSCHRIFT

(45) Veröffentlichungstag der Patentschrift: **18.12.91**

(51) Int. Cl.⁵: **B23H 7/08**

(21) Anmeldenummer: **88104897.9**

(22) Anmeldetag: **26.03.88**

(54) **Drahtelektrode zum funkenerosiven Schneiden.**

(43) Veröffentlichungstag der Anmeldung:
**04.10.89 Patentblatt 89/40**

(45) Bekanntmachung des Hinweises auf die
Patenterteilung:
**18.12.91 Patentblatt 91/51**

(84) Benannte Vertragsstaaten:
**AT BE CH DE ES FR GB GR IT LI LU NL SE**

(56) Entgegenhaltungen:
**CH-A- 645 831**

(73) Patentinhaber: **Berkenhoff GmbH**
**Eduard-Berkenhoff-Strasse 14**
**W-6301 Heuchelheim-Kinzenbach(DE)**

(72) Erfinder: **Hermanni, Hans**
**15, Ringstrasse**
**W-6349 Sinn-Fleisbach(DE)**

(74) Vertreter: **Missling, Arne, Dipl.-Ing.**
**Patentanwalt Bismarckstrasse 43**
**W-6300 Giessen(DE)**

## Beschreibung

Die Erfindung bezieht sich auf eine Drahtelektrode zum funkenerosiven Schneiden und insbesondere auf ein Verfahren zur Herstellung einer derartigen Drahtelektrode, wobei diese einen von einer Mantelschicht umgebenen Kern umfaßt. Die Drahtelektrode, auf welche sich die Erfindung bezieht, ist ganz allgemein als Erodierelektrode verwendbar.

Bei Funkenerosions-Arbeitsverfahren, insbesondere beim funkenerosiven oder elektroerosiven Schneiden wird eine Drahtelektrode entlang eines Schneidbereichs eines Werkstückes durch das Werkstück, d. h. den Schneidspalt, geführt. In bekannter Weise erfolgt dabei eine Spülung des Schneidbereichs mittels eines dielektrischen Flüssigkeit.

Den funkenerosiven Bearbeitungsverfahren liegt das Prinzip zugrunde, zwischen dem Werkstück und der Elektrode intermittierend einen Strom überschlagen zu lassen, durch welchen Metallpartikel des Werkstückes entfernt werden. Da der Strom zwischen der Oberfläche der Elektrode, welche üblicherweise in Form eines kontinuierlich durch den Schneidbereich gezogenen Drahtes ausgebildet ist, und dem Werkstück fließt, ist es offensichtlich, daß die Ergebnisse der funkenerosiven Bearbeitung in hohem Maße von der Oberflächengestalt und der Dimensionierung der Elektrode abhängig sind. Da bei dem funkenerosiven Bearbeiten nicht nur das Werkstück, sondern auch die Elektrode abgetragen wird, werden anfängliche Maßungenauigkeiten der Elektrode insbesondere bei deren Durchführung durch ein dickeres Werkstück in erheblichem Maße verstärkt. All dies führt dazu, daß insbesondere beim funkenerosiven Schneiden ein Schnitt nicht mit der erforderlichen Präzision und Oberflächengüte herstellbar ist.

Der Erfindung liegt die Aufgabe zugrunde, eine Drahtelektrode der eingangs genannten Art zu schaffen, welche eine hohe Oberflächengüte aufweist une einen gleichmäßigen elektrischen Übergang ermöglicht und welche eine hohe Zugfestigkeit bestizt.

Die Aufgabe wird erfindungsgemäß dadurch gelöst, daß in einem ersten Verfahrensschritt eine Querschnittsreduzierung der Drahtelektrode vorgenommen wird, daß anschließend in einem zweiten Verfahrensschritt eine Diffusionsglühung in oxidierender Atmosphäre erfolgt, daß die Drahtelektrode anschließend in einem dritten Verfahrensschritt einer weiteren Querschnittsreduzierung auf einen Zwischendurchmesser unterworfen wird, daß in einem vierten Verfahrensschritt eine rekristallisierende Glühung unter reduzierender Atmosphäre durchgeführt wird und daß in einem fünften Verfahrensschritt die Drahtelektrode auf einen Enddurchmesser verformt wird.

Die nach dem erfindungsgemäßen Verfahren hergestellte Drahtelektrode zeichnet sich gegenüber dem Stand der Technik durch eine Reihe erheblicher Vorteile aus. Durch die Verformung in dem ersten Verfahrensschritt ist es möglich, bezogen auf den Durchmesser des Ausgangsmaterials eine Querschnittsreduzierung des Drahtes in geeignetem Maße durchzuführen, wobei das Maß der Querschnittsreduzierung durch die Materialauswahl der Drahtelektrode bestimmt wird. Bei dem nachfolgenden Diffusionsglühen in oxidierender Atmosphäre wird eine Oxidation der Oberfläche des Drahtes oder der Drahtelektrode vorgenommen, wobei die Dicke der Diffusionsschicht den verwendeten Materialien des Kerns und der Mantelschicht angepaßt werden kann. Die Diffusionsschicht ermöglicht den Aufbau einer Randschicht, welche eine größere Dicke aufweisen kann als die Mantelschicht des Drahtes. Durch die Ausbildung der Oxidationsschichten ist es möglich, härtere Oberflächenschichten oder Oberflächenbereiche auszubilden, die zu einer Erhöhung der Schneidleistung und des Verschleißverhaltens der Drahtelektrode beitragen. In dem nachfolgenden dritten Verfahrensschritt wird der geglühte Draht einer weiteren Querschnittsreduzierung auf einen Zwischendurchmesser unterworfen. Die Querschnittsreduzierung ist möglich, da das Gefüge zumindest zum Teil während der Diffusionsglühung die durch die anfängliche Verformung aufgebrachte Verfestigung abbauen kann. Grundsätzlich ist es zwar nicht oder nur bedingt möglich, die in dem zweiten Verfahrensschritt erzeugten Diffusionsschichten plastisch zu verformen. Bei dem Draht ist eine weitere Querschnittsreduzierung jedoch möglich, da der Kern oder die Seele des Drahtes aus einem duktilen Material besteht, welches weiterhin plastisch verformbar ist und in welches sich die äußeren harten, im Prinzip nicht verformbaren Diffusionsmischkristalle, welche unter anderem $\beta$-und $\gamma$- sowie deren Mischkristallphasen umfassen, einpressen lassen.

Bei der nachfolgenden rekristallisierenden Glühung unter reduzierender Atmosphäre erfolgt die Ausbildung eines Gefüges aus relativ groben Körnern, um in dem fünften, nachfolgenden Verfahrensschritt eine weitere Reduzierung des Durchmessers der Drahtelektrode auf den Enddurchmesser zu ermöglichen.

Die Drahtelektrode weist ein hohes Maß an Oberflächengenauigkeit auf, da durch die zwei, nach der oxidierenden Diffusionsglühung erfolgenden Verformungsvorgänge und die zwischengeschaltete rekristallisierende Glühung Unregelmäßigkeiten an der Drahtoberfläche, welche durch Oxidpartikel oder Körner verursacht werden können, in zuverlässiger Weise beseitigt werden. Weiterhin zeichnet sich der Draht durch eine hohe Festigkeit, insbesondere eine hohe Zugfestigkeit aus, so daß es möglich ist, diesen in einer Funkenerosionsmaschine unter hoher mechanischer Spannung durch das Werkstück zu führen. Sowohl durch diese Maßnahme als auch durch die hohe Oberflächengüte und Oberflächenpräzision der erfindungsgemäßen Drahtelektrode ist es möglich, hochpräzise Schnitte vorzunehmen.

In einer vorteilhaften Weiterbildung des erfindungsgemäßen Verfahrens ist das Kernmaterial der Drahtelektrode aus einer Kupfer- oder Kupfer-Zink-Legierung hergestellt. die Mantelschicht kann entweder aus Zink oder aus einem Metall mit niedriger Verdampfungstemperatur gefertigt sein, wobei im letzteren Fall beispielsweise Cadmium, Wismut, Antimon oder eine Legierung aus einem oder mehreren dieser Metalle verwendet werden kann.

Bei der Durchführung des ersten Verfahrensschrittes kann es sich als vorteilhaft erweisen, wenn die Verformung 40 bis 70 %, bezogen auf den Ausgangsquerschnitt des Materials, beträgt. Bei diesem Verformungsgrad ist gewährleistet, daß der Kern oder die Seele des Drahtmaterials noch eine ausreichende Verformbarkeit aufweist, um nach dem oxidierenden Glühen in dem zweiten Verfahrensschritt unter Einpressung der härteren Mischkristalle und deren Oxidpartikel weiterverformbar zu sein.

Bevorzugterweise erfolgt die Glühung im zweiten Verfahrensschritt in einem Temperaturbereich von 454 bis 902 ° C, wobei sich zur Glühbehandlung elektrische Widerstandsglühverfahren, Induktions- und Strahlungsglühverfahren besonders eignen, da dieser zum einen als Durchlauf-Glühverfahren angewendet werden können und zum anderen eine besonders präzise Regelung des Glühvorganges ermöglichen.

Weiterhin erweist es sich im zweiten Verfahrensschritt als günstig, die Glühung über einen Zeitraum vorzunehmen, der die Ausbildung einer Diffusionsschicht mit der Dicke von 100 bis 500 % der Dicke der Mantelschicht ermöglicht. Wenn die Mantelschicht oder Auflage beispielsweise eine Dicke von 20 µm aufweist, ist es vorteilhaft, die Diffusionsschicht mit einer Dicke von 40 bis 100 µm auszubilden.

In günstiger Weise beträgt der Verformungsgrad im dritten Verfahrensschritt 40 bis 70 %. Durch diese Verformung wird zum einen eine ausreichende Verfestigung des Drahtmaterials bewirkt, zum anderen ist es möglich, die bei der Diffusionsglühung erzeugten Oxide in ausreichender Weise in das weichere Kernmaterial einzudrücken.

Bevorzugterweise erfolgt die rekristallisierende Glühung im vierten Verfahrensschritt in einem Temperaturbereich von 600 bis 850 ° C, wobei die Rektristallisierung vorteilhafterweise in einem Ofen unter reduzierender Atmosphäre durchgeführt wird, um insbesondere die Oberfläche der Drahtelektrode zu rekristallisieren.

In Abhängigkeit von der gewünschten Endfestigkeit der Drahtelektrode erfolgt die Verformung im fünften Verfahrensschritt bei einem Verformungsgrad von 10 bis 80 %, bezogen jeweils auf den zugrundeliegenden Querschnitt der Drahtelektrode.

Im folgenden wird die Erfindung anhand eines Ausführungsbeispiels in Verbindung mit den nachfolgenden Figuren näher erläutert. Dabei zeigt:

Fig. 1 eine Schliffansicht durch das Ausgangsmaterial der Drahtelektrode,

Fig. 2 eine Schliffansicht durch die Drahtelektrode nach Durchführung des zweiten Verfahrensschrittes,

Fig. 3 eine Schliffansicht der Drahtelektrode nach Durchführung des dritten Verfahrensschrittes,

Fig. 4 eine Schliffansicht der Drahtelektrode nach Durchführung des vierten Verfahrensschrittes und

Fig. 5 eine Schliffansicht der Drahtelektrode nach dem fünften Verfahrensschritt.

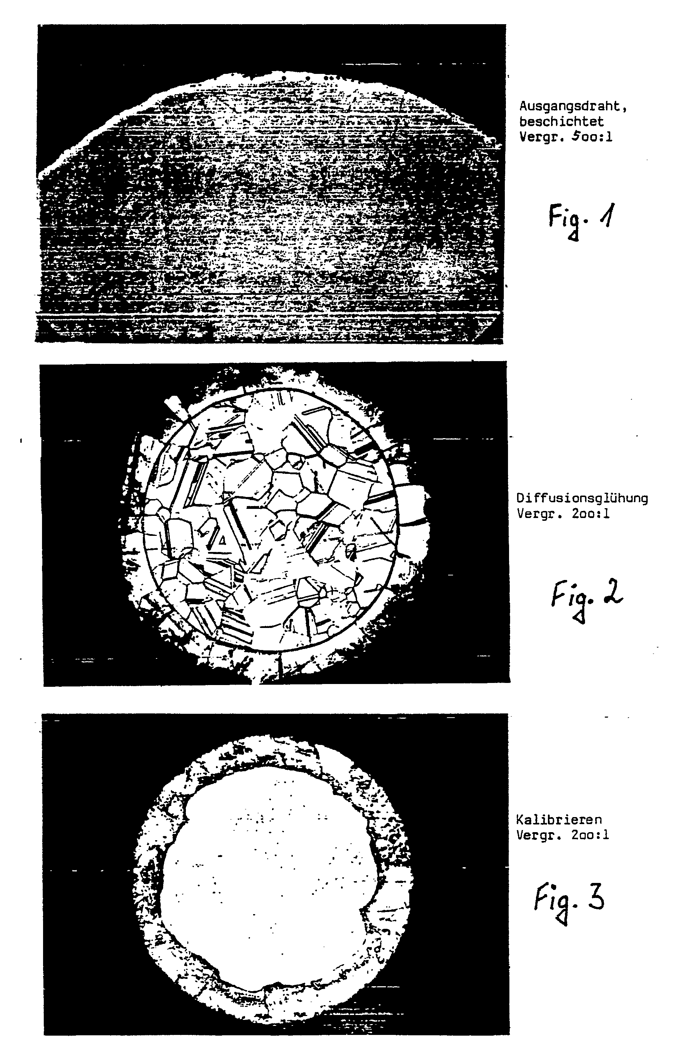

In Fig. 1 ist eine Teil-Schliffansicht durch das Ausgangsmaterial zur Herstellung der Drahtelektrode dargestellt. Das Ausgangsmaterial weist einen Kern auf, welcher von einer Mantelschicht aus Zink umgeben ist.

In Fig. 2 ist eine Schliffansicht der Drahtelektrode nach Durchführung des ersten und des zweiten Verfahrensschrittes dargestellt. Das Gefüge wurde somit im Querschnitt bereits reduziert und der Diffusionsglühung in oxidierender Atmosphäre unterworfen.

In Fig. 3 ist eine Schliffansicht der Drahtelektrode nach Durchführung des dritten Verfahrensschrittes dargestellt, in welchem eine weitere Querschnittsreduzierung erfolgt ist, wobei die härteren Randphasen, welche in der Diffusionsglühung in dem zweiten Verfahrensschritt erzeugt wurden, in das weichere Kernmaterial eingepreßt wurden.

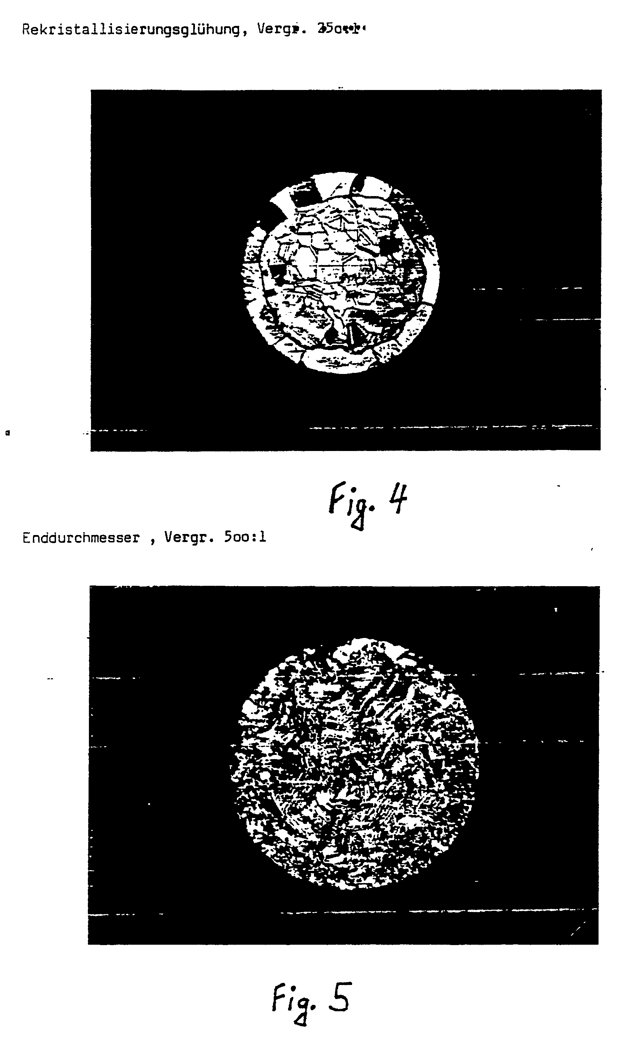

Fig. 4 zeigt eine Schliffansicht der Drahtelektrode nach Durchführung des vierten Verfahrensschritts, d. h. nach der rekristallisierenden Glühung unter reduzierender Atmosphäre. Dabei ist deutlich zu erkennen, daß die äußere Schicht, d. h. die Mantelschicht, relativ große, durch die Rekristallisierung gewachsene Körner aufweist.

In Fig. 5 ist eine Schliffansicht des Endzustandes der Drahtelektrode abgebildet. Hierbei zeigt sich, daß die Drahtelektrode klar voneinander abgegrenzt eine Mantelschicht und einen Kern aufweist, wobei insgesamt ein sehr gleichmäßiges Gefüge ausgebildet ist.

Die Drahtelektrode zeichnet sich durch ein hohes Maß an Schneidgenauigkeit aus, weist eine hohe Festigkeit, insbesondere eine hohe Zugfestigkeit auf und ermöglicht eine vergleichsweise hohe Schneidleistung bei einer sehr geringen Rauhtiefe. Alle diese Umstände ermöglichen eine hohe Formgenauigkeit der unter Verwendung der Drahtelektrode erosionsgeschnittenen Werkstücke. Durch die Nachverformung des rekristallisierten Gefüges wird erfindungsgemäß ein sehr dichtes äußeres oxidfreies Gefüge erzielt, welches bedingt durch seine Homogenität und seine Dichtheit einen sehr gleichmäßigen Funkenübergang gewährleistet. Auch dies führt zu einer erheblichen Verbesserung der Oberflächengüte der geschnittenen Werkstücke.

Ein nach dem erfindungsgemässen Verfahren hergestellter Draht hat vorteilhaft eine Mindestzugfestigkeit, die über 400 N/mm² liegt.

## Patentansprüche

1. Verfahren zur Herstellung einer Drahtelektrode zum funkenerosiven Schneiden, wobei die Drahtelektrode einen von einer Mantelschicht umgebenen Kern umfaßt, dadurch gekennzeichnet, daß in einem ersten Schritt eine Querschnittsreduzierung vorgenommen wird, daß anschließend in einem zweiten Schritt eine Diffusionsglühung in oxidierender Atmosphäre erfolgt, daß die Drahtelektrode in einem dritten Schritt einer weiteren Querschnittsreduzierung auf einen Zwischendurchmesser unterworfen wird, daß in einem vierten Schritt eine rekristallisierende Glühung unter reduzierender Atmosphäre durchgeführt wird und daß in einem fünften Schritt die Drahtelektrode auf einen Enddurchmesser verformt wird.

2. Verfahren nach Anspruch 1, dadurch gekennzeichnet, daß der Kern der Drahtelektrode aus einer Kupfer- oder Kupfer-Zink-Legierung hergestellt wird und daß als Mantelschicht Zink verwendet wird.

3. Verfahren nach Anspruch 1, dadurch gekennzeichnet, daß der Kern der Drahtelektrode aus einer Kupfer- oder Kupfer-Zink-Legierung gerfertigt und mit einer Mantelschicht aus einem Metall mit niedriger Verdampfungstemperatur, wie z. B. Cadmium, Wismut, Antimon oder einer Legierung aus einem oder mehreren dieser Metalle versehen ist.

4. Verfahren nach einem der Ansprüche 1 bis 3, dadurch gekennzeichnet, daß die Verformung im ersten Schritt 40 bis 70 % beträgt.

5. Verfahren nach einem der Ansprüche 1 bis 4, dadurch gekennzeichnet, daß die Glühung im zweiten Verfahrensschritt in einem Temperaturbereich von 454 bis 902 °C erfolgt.

6. Verfahren nach einem der Ansprüche 1 bis 5, dadurch gekennzeichnet, daß im zweiten Verfahrensschritt die Glühung solange erfolgt, bis eine Diffusionsschicht von 100 bis 500 % der Dicke der Mantelschicht gebildet wird.

7. Verfahren nach einem der Ansprüche 1 bis 6, dadurch gekennzeichnet, daß die Glühung im zweiten Verfahrensschritt in Form elektrischer Widerstandsglühung, Induktions- oder Strahlungsglühung erfolgt.

8. Verfahren nach einem der Ansprüche 1 bis 7, dadurch gekennzeichnet, daß im dritten Verfahrensschritt eine Verformung von 40 bis 70 % erfolgt.

9. Verfahren nach einem der Ansprüche 1 bis 8, dadurch gekennzeichnet, daß die rekristallisierende Glühung im vierten Verfahrensschritt in einem Temperaturbereich von 600 bis 850 °C erfolgt.

10. Verfahren nach einem der Ansprüche 1 bis 9, dadurch gekennzeichnet, daß die Glühung im vierten Verfahrensschritt in einer reduzierenden Ofenatmosphäre erfolgt.

11. Verfahren nach einem der Ansprüche 1 bis 10, dadurch gekennzeichnet, daß die Verformung im fünften Verfahrensschritt 10 bis 80 % beträgt.

## Claims

1. Method of producing a wire electrode for spark-erosive cutting, wherein the wire electrode comprises a core surrounded by an outer layer, characterised in that, in a first stage, cross section reduction is carried out, subsequently, in a second stage, diffusion annealing in an oxidising atmosphere is carried out, in a third stage, the wire electrode is subjected to a further cross section reduction to an intermediate diameter, in a fourth stage recrystallising annealing is carried out under a reducing atmosphere, and, in a fifth stage, the wire electrode is deformed to a final diameter.

2. Method according to claim 1, characterised in that the core of the wire electrode is made from a copper or copper/zinc alloy and zinc is used as the outer layer.

3. Method according to claim 1, characterised in that the core of the wire electrode is made of a copper or copper/zinc alloy and is provided with an outer layer of a metal having a low evaporation temperature, such as, for example, cadmium, bismuth, antimony or an alloy of one or more of these metals.

4. Method according to one of claims 1 to 3, characterised in that the deformation in the first stage is 40 to 70%.

5. Method according to one of claims 1 to 4, characterised in that the annealing in the second method stage is carried out in a temperature range of 454 to 902° C.

6. Method according to one of claims 1 to 5, characterised in that, in the second method stage, annealing is carried out until a diffusion layer of 100 to 500% of the thickness of the outer layer is formed.

7. Method according to one of claims 1 to 6, characterised in that the annealing in the second method stage is carried out in the form of electric resistance annealing, induction or radiation annealing.

8. Method according to one of claims 1 to 7, characterised in that, in the third method stage, a deformation of 40 to 70% takes place.

9. Method according to one of claims 1 to 8, characterised in that the recrystallising annealing in the fourth method stage is carried out in a temperature range of 600 to 850° C.

10. Method according to one of claims 1 to 9, characterised in that the annealing in the fourth method stage is carried out in a reducing furnace atmosphere.

11. Method according to one of claims 1 to 10, characterised in that the deformation in the fifth method stage is 10 to 80%.

**Revendications**

1. Procédé de fabrication d'un fil-électrode pour découpage par électro-érosion, pour lequel le fil-électrode comporte un noyau entouré par une couche de revêtement, caractérisé en ce que, dans une première étape, on réalise une réduction de section, en ce qu'ensuite, dans une deuxième étape, a lieu un recuit de diffusion en atmosphère oxydante, en ce que, dans une troisième étape, le fil-électrode est soumis à une nouvelle réduction de section à un diamètre intermédiaire, en ce que, dans une quatrième étape, on effectue un recuit de recristallisation sous atmosphère réductrice, et en ce que, dans une cinquième étape, le fil-électrode subit un formage à son diamètre final.

2. Procédé suivant la revendication 1, caractérisé en ce que le noyau du fil-électrode est fabriqué à partir d'un alliage de cuivre ou d'un alliage zinc-cuivre et en ce qu'on utilise du zinc comme couche de revêtement.

3. Procédé suivant la revendication 1, caractérisé en ce que le noyau du fil-électrode est fabriqué à partir d'un alliage de cuivre ou d'un alliage zinc-cuivre et est muni d'une couche de revêtement en un métal ayant une température de vaporisation basse, comme, par exemple, du cadmium, du Bismuth, de l'antimoine ou un alliage d'un ou plusieurs de ces métaux.

4. Procédé suivant l'une quelconque des revendications 1 à 3, caractérisé en ce que la déformation, dans la première étape, est de 40 à 70 %.

5. Procédé suivant l'une quelconque des revendications 1 à 4, caractérisé en ce que le recuit de la deuxième étape du procédé, a lieu dans une zone de température de 454 à 902° C.

6. Procédé suivant l'une quelconque des revendications 1 à 5, caractérisé en ce que, dans la deuxième étape du procédé, le recuit se poursuit assez longtemps pour qu'il se forme une couche de diffusion de 100 à 500 % de l'épaisseur de la couche de revêtement.

7. Procédé suivant l'une quelconque des revendications 1 à 6, caractérisé en ce que, dans la deuxième étape du procédé, le recuit se fait sous la forme d'un chauffage par résistance électrique, par induction ou par rayonnement.

8. Procédé suivant l'une quelconque des revendications 1 à 7, caractérisé en ce que, dans la troisième étape du procédé, a lieu une déformation de 40 à 70 %.

9. Procédé suivant l'une quelconque des revendications 1 à 8, caractérisé en ce que, dans la quatrième étape du procédé, le recuit de recristallisation a lieu dans une zone de température de 600 0 850° C.

10. Procédé suivant l'une quelconque des revendications 1 à 9, caractérisé en ce que, dans la cinquième étape du procédé, le recuit a lieu en atmosphère de four réductrice.

11. Procédé suivant l'une quelconque des revendications 1 à 10, caractérisé en ce que, dans la cinquième étape du procédé, la déformation est de 10 à 80%.

Ausgangsdraht,
beschichtet
Vergr. 5oo:1

Fig. 1

Diffusionsglühung
Vergr. 2oo:1

Fig. 2

Kalibrieren
Vergr. 2oo:1

Fig. 3

Rekristallisierungsglühung, Vergr. 350:1

Fig. 4

Enddurchmesser , Vergr. 5oo:1

Fig. 5